# FASCICULE DE BREVET EUROPEEN

(11) **EP 3 515 988 B1**
(45) Date de publication et mention de la délivrance du brevet: **26.04.2023**
(21) Numéro de dépôt: 17777618.4
(22) Date de dépôt: 14.09.2017
(51) Int. Cl.: C08L 95/00

(54) **COMPOSITION COMPRENANT UN OU PLUSIEURS ADDITIFS PARTICULIERS**
ZUSAMMENSETZUNG MIT EINEM ODER MEHREREN BESTIMMTEN ADDITIVEN
COMPOSITION COMPRISING ONE OR MORE PARTICULAR ADDITIVES

(30) Priorité: 22.09.2016 FR 1658913
(43) Date de publication de la demande: 31.07.2019
(73) Titulaire: Arkema France, 92700 Colombes (FR)
(72) Inventeur: JORDA, Eric, 69005 Lyon (FR); LIGIER, Sandrine, 69491 Pierre-Benite Cedex (FR); LUCA, Vincent, 69360 Solaize (FR); BIRKEN, Isabelle, 69360 Serezin Du Rhône (FR)
(86) Numéro de dépôt international: PCT/FR2017/052451
(87) Numéro de publication internationale: WO 2018/055261

(56) Documents cités:
- DAVID T. BOWMAN ET AL: "Identification of individual thiophene-, indane-, tetralin-, cyclohexane-, and adamantane-type carboxylic acids in composite tailings pore water from Alberta oil sands : Naphthenic acids associated with oil sands", RAPID COMMUNICATIONS IN MASS SPECTROMETRY., vol. 28, no. 19, 15 octobre 2014 (2014-10-15), pages 2075-2083, XP055372654, GB ISSN: 0951-4198, DOI: 10.1002/rcm.6996
- Parviz Rahimi, Tomoki Kayukawa, Ryan Rodgers and Teclemariam Alem: "Comparison of the Reactivity ofNaphthenic Acids in Athabasca bitumenand San Joaquin Valley", Joint CCQTA/COQA Meeting , 10 février 2010 (2010-02-10), XP002770137, Extrait de l'Internet: URL:http://www.coqa-inc.org/docs/default-s ource/meeting-presentations/20100211_rahim i_athabasca_-napacids.pdf?sfvrsn=2 [extrait le 2017-05-15]

## Description

La présente invention concerne une composition comprenant un ou plusieurs additifs particuliers destinée à la préparation d'enrobés coulés à froid.

Dans le domaine de l'industrie routière, les revêtements bitumineux sont généralement préparés selon deux techniques : les techniques dites « à chaud », dans lesquelles le bitume est porté à des températures élevées (typiquement 150°C-170°C) et les techniques dites « à froid », basées sur l'utilisation d'émulsions de bitume en phase aqueuse, à des températures beaucoup plus faibles (typiquement 30°C à 60°C).

Ces émulsions de bitume sont utilisées de manière courante pour diverses applications routières, où elles peuvent être répandues seules pour obtenir par exemple des couches d'accrochage, des couches d'imprégnation et des réparations ponctuelles (joints, colmatages de fissures, et autres), soit en présence de granulats pour réaliser des enduits superficiels. Elles peuvent également être mélangées à des granulats pour obtenir des enrobés à froid, soit juste avant la pose (enrobés coulés à froid ou ECF), soit en centrale d'enrobage (grave-émulsions, bétons bitumineux à l'émulsion, etc.).

Il est par ailleurs connu d'utiliser divers additifs dans les bitumes afin d'en améliorer les performances, de contrôler leur viscosité, d'ajuster leur degré d'enrobage sur des granulats minéraux pour former des enrobés, et autres.

Parmi les additifs couramment utilisés dans les bitumes, les tensioactifs occupent aujourd'hui une place tout à fait prépondérante dans la plupart des techniques de préparation des bitumes et des enrobés :
- pour les techniques dites « à chaud », les tensioactifs peuvent être ajoutés directement dans le bitume pour améliorer les propriétés d'adhésivité du bitume sur le granulat, ou pour permettre l'obtention d'un enrobé à plus basse température (technologie dite « tiède ») ;
- pour les techniques dites « en émulsion », le recours à un ou plusieurs tensioactifs utilisés comme agents émulsifiants sont nécessaires pour former les émulsions.

Concernant les techniques dites « en émulsion », dans lesquelles le bitume est émulsionné avec une phase aqueuse, on distingue les émulsions non ioniques, anioniques et cationiques.

Les émulsions non ioniques utilisent des tensioactifs (émulsifiants) non chargés (de type alcools gras polyalcoxylés, nonylphénol polyalcoxylés ou autre composés polyalcoxylés, alkyl-polyglucosides et autres). L'émulsion peut être réalisée à pH neutre, basique ou acide.

Les émulsions anioniques utilisent des tensioactifs anioniques, c'est-à-dire des émulsifiants porteurs de groupements sulfates, sulfonates, carboxylates et autres. Avant la formation de l'émulsion proprement dite, la phase aqueuse peut être traitée si nécessaire par une base forte afin de salifier les fonctions acides, de sorte que le tensioactif, et par conséquent les gouttelettes de bitume dans l'émulsion, soient chargés négativement. Dans ce cas, l'émulsion anionique présente un pH basique.

Les émulsions cationiques utilisent des tensioactifs cationiques c'est-à-dire des émulsifiants porteurs de fonctions aminés, ammonium quaternaire, et autres. Avant la formation de l'émulsion proprement dite, la phase aqueuse peut être traitée si nécessaire par un acide fort, de sorte que le tensioactif, et par conséquent les gouttelettes de bitume dans l'émulsion, soient chargés positivement. Dans ce cas, l'émulsion cationique présente un pH acide. Lorsque le tensioactif est sous forme de sel d'ammonium quaternaire, dans lequel le ou les atomes d'azote sont chargés positivement de manière permanente, l'émulsion résultante peut ainsi être utilisée sans ajustement de pH.

Actuellement la grande majorité des tensioactifs utilisés pour réaliser des émulsions de bitume anioniques est basée sur la chimie des acides gras et des polyacides, tels que par exemple le Stabiram^{®} EB commercialisé par CECA S.A.

Pour les émulsions de bitume cationiques, les tensioactifs commerciaux sont basés sur la chimie des polyamines grasses et polyamines grasses alcoxylées, telles que par exemple les Dinoram^{®} S, Dinoram^{®} SL, Polyram^{®} S et Polyram^{®} SL commercialisés par CECA S.A., ainsi que des produits issus de la condensation de mono- ou poly-acides gras sur des polyéthylènepolyamines ou des polyéthanolamines, telles que par exemple les Émulsamine^{®} L60, Émulsamine^{®} L70 et Émulsamine^{®} LZ commercialisées par CECA S.A.

Il est connu de l'homme du métier que les émulsions cationiques conduisent à une bonne adhésion du bitume sur les granulats acides dont la surface est chargée négativement (par exemple quartz, silicates, et autres). Il est à noter que ceci est particulièrement vrai pour les tensioactifs aminés qui ne présentent pas de fonctions ammonium quaternaires. La sensibilité à l'eau de ces derniers, rend alors l'adhésion bitume/granulats moins robuste.

Dans le cas général des enrobés à froid, les applicateurs recherchent non seulement un bon enrobage du granulat par le bitume, dans toutes les étapes du procédé, mais également de bonnes propriétés d'adhésivité bitume/granulats, ainsi qu'une cohésion suffisante permettant une ouverture au trafic rapide, sans dégradation (arrachement, fissurations et autres).

Dans le cas particulier des enrobés coulés à froid (ECF), les applicateurs recherchent non seulement des bonnes propriétés d'adhésivité bitume/granulats et un temps de malaxage suffisant permettant une pose correcte, mais également une prise rapide de l'enrobé.

Par enrobé coulé à froid (ECF), on entend selon la présente invention un matériau préparé sur place par des machines spécifiques telles que celles proposées par la société Breining, et posé à l'état fluide comme décrit dans la note d'information du SETRA (Service d'Études Techniques des Routes et Autoroutes), « Chaussées Dépendances », n°102, juin 1997. Une autre description de ce type de matériaux peut être trouvée dans les directives publiées en 2003 par l'ISSA (« International Slurry Seal Association » à Annapolis, MD, USA). Les ECF sont entendus ici comme toutes les variantes de cette technologie, tels que les coulis bitumineux (décrits aussi dans la note du SETRA) et les appellations internationales telles que « Microsurfacing » et « slurry seal ».

Tout paramètre égal par ailleurs (granulats, et système émulsifiant), il est connu de l'homme du métier qu'un bitume de type naphténique permet une montée en cohésion de l'enrobé beaucoup plus rapide qu'un bitume de type paraffinique. Une distinction entre bitumes naphténiques et bitumes paraffiniques peut être réalisée par mesure du taux de fonctions carbonyle comme indiqué par E. Gasthauer et coll. dans « Fuel », 87, (2008), pages 1428-1434. Des bitumes naphténiques issus de bruts pétroliers provenant du Venezuela, sont par exemple commercialisés en Europe par la société Nynas AB. Dans les pays où le bitume naphténique est disponible, les ECF sont donc préparés avec ce type de bitume, ce qui permet une réouverture au trafic très rapide, typiquement dès 15 minutes à 30 minutes après l'épandage.

En revanche, dans les pays où les bitumes naphténiques ne sont pas ou peu disponibles, et où les ECF sont donc préparés avec des bitumes paraffiniques, les temps de réouverture au trafic sont beaucoup plus longs, ce qui rend cette technique moins compétitive. Il reste un besoin pour des ECF préparés avec des bitumes paraffiniques qui puissent être utilisés dans les mêmes conditions que les ECF préparés avec des bitumes naphténiques.

Même si la différence est moins marquée pour les autres types d'enrobés à froid, la performance obtenue avec les bitumes naphténiques en terme de cohésion est supérieure.

Les applicateurs sont ainsi à la recherche d'une solution plus robuste qui leur permette d'utiliser non seulement des enrobés à froid préparés avec des bitumes paraffiniques, mais aussi de travailler avec tout type de bitume, notamment pour préparer des enrobés à froid, tout en conservant les mêmes propriétés applicatives, typiquement en permettant une réouverture très rapide au trafic.

La demande internationale WO 2005/012433 propose un mélange pour émulsions qui contient un émulsifiant (tensioactif) et un désémulsionnant. Ce mélange développe une rupture et une montée en cohésion rapides. On entend par « rupture » la déstabilisation de l'émulsion avec séparation de l'eau et du bitume. La « montée en cohésion » se traduit par le durcissement du revêtement sous l'effet du collage de la structure granulaire par le bitume libéré lors de la rupture de l'émulsion.

L'émulsifiant est un sel de diamine avec un acide phosphorique polyvalent. L'acide polyphosphorique est plus précisément cité. Le désémulsionnant est à base de ciment. Cette solution présente le désavantage de devoir mettre en oeuvre une salification à l'acide ortho-phosphorique, alors que l'acide chlorhydrique est plus largement répandu. Or de nombreuses usines d'émulsion ne possèdent pas plusieurs stockages d'acide, et souhaiteraient disposer d'une solution indépendante du type de bitume et utilisable avec l'acide chlorhydrique.

Le brevet US5096495 décrit un « slurry seal » avec une montée en cohésion améliorée grâce à l'utilisation conjointe d'un émulsifiant spécifique et d'un additif introduit dans l'eau de mouillage des granulats. L'introduction dudit additif dans l'eau de mouillage des granulats est peu pratique car elle nécessite l'adaptation des machines et peut interférer avec l'utilisation des additifs de contrôle qui sont couramment utilisés dans ces techniques pour procurer de la souplesse en termes de maniabilité sur le terrain.

Par ailleurs, le brevet FR2930253 décrit l'amélioration de la montée en cohésion avec bitume paraffinique par ajout d'un acide gras polymérisé dans le bitume avant émulsification.

Les acides gras polymérisés, sont des acides issus de la polymérisation des chaînes latérales d'au moins un acide gras insaturé. Les acides gras insaturés permettant d'obtenir les acides gras polymérisés, sont des acides gras insaturés de 4 à 24 atomes de carbone (C₄ à C₂₄), de préférence de 11 à 22 atomes de carbone (C₁₁ à C₂₂), de préférence encore de 16 à 18 atomes de carbone (C₁₆ à C₁₈).

Cette solution oblige cependant l'utilisateur à manipuler au moins deux additifs : un émulsifiant et un acide gras polymérisé (dope). L'utilisateur doit donc avoir recours à un grade de bitume dit « dopé », et par conséquent doit disposer d'un stockage particulier dédié à l'application des ECF, ou bien il doit doper son bitume avant de préparer l'émulsion. Or, toutes les usines de préparation d'émulsions de bitumes ne sont pas équipées de stockages dédiés ou d'installations permettant de doper le bitume.

Ainsi la présente invention a pour premier objectif de s'affranchir des inconvénients connus de l'art antérieur concernant les enrobés coulés à froid, et en particulier de pouvoir mettre à la disposition de l'utilisateur final des émulsions de tous types de bitumes, pouvant être mises en oeuvre dans la préparation d'enrobés coulés à froid, présentant une résistance interne améliorée et une montée en cohésion rapide.

L'invention a donc pour objet une composition comprenant au moins un bitume et au moins un additif choisi parmi les composés de formule (I) suivante et les composés de formule (II) suivante : 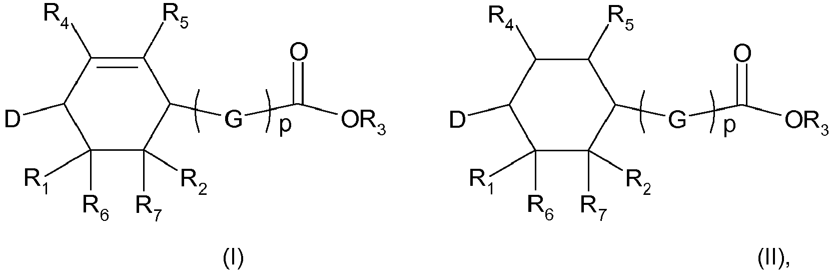 dans lesquelles :
- R₁ et R₂, identiques ou différents, représentent, indépendamment l'un de l'autre, un groupe choisi parmi un atome d'hydrogène, un groupe -(A1)_{q1}-S(O)₂OR₈, un groupe -(A2)_{q2}-P(O)(OR₉)₂ et un groupe -(A3)_{q3}-C(O)OR₁₀,
   - R₈, R₉ et R₁₀, identiques ou différents, représentent, indépendamment l'un de l'autre, un atome d'hydrogène ou un radical alkyle, linéaire ou ramifié, saturé ou insaturé, en C₁-C₂₂,
   - A1, A2 et A3, identiques ou différents, représentent, indépendamment l'un de l'autre, un radical alkylène, linéaire ou ramifié, en C₁-C₄, de préférence en C₁-C₂, de préférence encore en C₁,
   - q1, q2 et q3, identiques ou différents, représentent, indépendamment l'un de l'autre, un nombre entier valant 0 ou 1,
- ou R₁ et R₂ forment avec les atomes de carbone auxquels ils sont rattachés un hétérocycle à 5 chainons,
   étant entendu que R₁ et R₂ ne représentent pas simultanément un atome d'hydrogène ;
- R₃ représente un atome d'hydrogène ou un radical alkyle, linéaire ou ramifié, saturé ou insaturé, en C₁-C₂₂ ;
- R₄ et R₅, identiques ou différents, représentent, indépendamment l'un de l'autre, un atome d'hydrogène, ou un radical alkyle, linéaire ou ramifié, saturé ou insaturé, en C₁-C₂₂ ;
- R₆ et R₇, identiques ou différents, représentent, indépendamment l'un de l'autre, un atome d'hydrogène ou un radical alkyle, linéaire ou ramifié, saturé ou insaturé, en C₁-C₄, de préférence en C₁ ou en C₂ ou en C₃;
- D représente un atome d'hydrogène ou un radical alkyle, linéaire ou ramifié, saturé ou insaturé, en C₁-C₂₂ ;
- G représente un radical alkylène, linéaire ou ramifié, saturé ou insaturé, en C₁-C₂₂ ;
- p est un nombre entier valant 0 ou 1.

La composition selon l'invention permet de fabriquer des émulsions bitumineuses présentant des performances nettement supérieures à celles obtenues dans les mêmes conditions sans additif. Ces émulsions présentent un intérêt particulier en vue de leur utilisation pour préparer des enrobés coulés à froid car elles confèrent auxdits enrobés une montée en cohésion très rapide et des propriétés de résistance à l'eau améliorées, et ce quelque soit le système émulsifiant et la nature des granulats.

Il est précisé que les expressions « de... à... » utilisées dans la présente description doivent s'entendre comme incluant chacune des bornes mentionnées.

On entend par hétérocycle dans la présente invention une structure cyclique comprenant au moins un hétéroatome choisi parmi O, N et S.

On entend par émulsion dans la présente invention un système hétérogène à deux ou plusieurs phases liquides, constitué par une phase liquide continue et au moins une deuxième phase liquide, dispersée dans la première, sous forme de fines gouttelettes.

On entend par émulsion bitumineuse dans la présente invention une dispersion aqueuse de bitume comprenant éventuellement un ou plusieurs additifs, tensioactifs, émulsifiants, viscosifiants, épaississants, fluxants, plastifiants et/ou tout autre additif permettant d'ajuster les propriétés de I' émulsion.

Les bitumes utilisés dans la présente invention sont des bitumes issus de différentes origines. On peut citer tout d'abord les bitumes d'origine naturelle, ceux contenus dans des gisements de bitume naturel, d'asphalte naturel ou les sables bitumineux.

Les bitumes selon l'invention sont aussi les bitumes provenant du raffinage du pétrole brut. Les bitumes proviennent de la distillation atmosphérique et/ou sous vide du pétrole. Ces bitumes pouvant être éventuellement soufflés, viscoréduits et/ou désasphaltés. Les bitumes peuvent être des bitumes de grade dur ou de grade mou. Les différents bitumes obtenus par les procédés de raffinage peuvent être combinés entre eux pour obtenir le meilleur compromis technique.

Les bitumes utilisés peuvent également être des bitumes fluxés par addition de solvants volatils, de fluxants d'origine pétrolière, de fluxants carbochimiques et/ou de fluxants d'origine végétale.

Les bitumes modifiés par des polymères peuvent également être utilisés. Comme polymère, on peut citer par exemple, et de manière indicative et non limitative, les élastomères thermoplastiques comme les copolymères statistiques ou séquences de styrène et de butadiène, linéaire ou en étoile (SBR, SBS) ou de styrène et d'isoprène (SIS), éventuellement réticulés, les copolymères d'éthylène et d'acétate de vinyle, les homopolymères et copolymères oléfiniques d'éthylène (ou propylène, ou butylène), les polyisobutylènes, les polybutadiènes, les polyisoprènes, les poly(chlorure de vinyle), les poudrettes de caoutchouc ou encore tout polymère utilisé pour la modification des bitumes ainsi que leurs mélanges. On utilise en général une quantité de polymère de 2 à 10% en poids par rapport au poids de bitume.

On peut aussi utiliser des bitumes synthétiques également appelés bitumes clairs, pigmentables ou colorables. Ces bitumes contiennent peu ou pas d'asphaltènes et peuvent être par conséquent colorés. Ces bitumes synthétiques sont à base de résine de pétrole et/ou de résine indène-coumarone et d'huile lubrifiante comme décrit par exemple dans le brevet EP179510.

Avantageusement, le bitume est un bitume de pénétrabilité mesurée selon la norme NF EN 1426 de Juin 2007 allant de 10 à 300, préférentiellement de 20 à 220, plus préférentiellement de 70 à 220.

De préférence, le bitume selon l'invention est choisi parmi les bitumes de raffinage de pétrole brut non modifiés.

La composition selon l'invention comprend au moins un bitume et au moins un additif choisi parmi les composés de formule (I) suivante et les composés de formule (II) suivante : 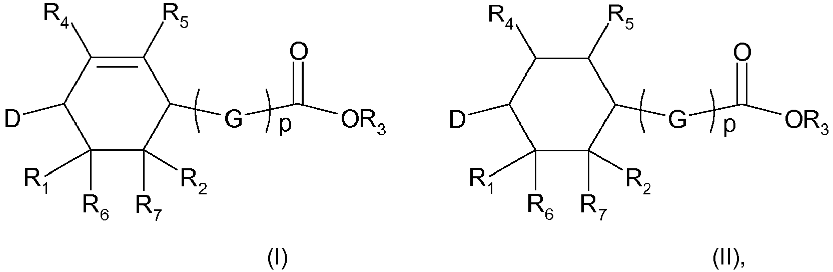 dans lesquelles :
- R₁ et R₂, identiques ou différents, représentent, indépendamment l'un de l'autre, un groupe choisi parmi un atome d'hydrogène, un groupe -(A1)_{q1}-S(O)₂OR₈, un groupe -(A2)_{q2}-P(O)(OR₉)₂ et un groupe -(A3)_{q3}-C(O)OR₁₀,
   - R₈, R₉ et R₁₀, identiques ou différents, représentent, indépendamment l'un de l'autre, un atome d'hydrogène ou un radical alkyle, linéaire ou ramifié, saturé ou insaturé, en C₁-C₂₂,
   - A1, A2 et A3, identiques ou différents, représentent, indépendamment l'un de l'autre, un radical alkylène, linéaire ou ramifié, en C₁-C₄, de préférence en C₁-C₂, de préférence encore en C₁,
   - q1, q2 et q3, identiques ou différents, représentent, indépendamment l'un de l'autre, un nombre entier valant 0 ou 1,
- ou R₁ et R₂ forment avec les atomes de carbone auxquels ils sont rattachés un hétérocycle à 5 chainons,
   étant entendu que R₁ et R₂ ne représentent pas simultanément un atome d'hydrogène ;
- R₃ représente un atome d'hydrogène ou un radical alkyle, linéaire ou ramifié, saturé ou insaturé, en C₁-C₂₂ ;
- R₄ et R₅, identiques ou différents, représentent, indépendamment l'un de l'autre, un atome d'hydrogène, ou un radical alkyle, linéaire ou ramifié, saturé ou insaturé, en C₁-C₂₂ ;
- R₆ et R₇, identiques ou différents, représentent, indépendamment l'un de l'autre, un atome d'hydrogène ou un radical alkyle, linéaire ou ramifié, saturé ou insaturé, en C₁-C₄, de préférence en C₁ ou en C₂ ou en C₃;
- D représente un atome d'hydrogène ou un radical alkyle, linéaire ou ramifié, saturé ou insaturé, en C₁-C₂₂;
- G représente un radical alkylène, linéaire ou ramifié, saturé ou insaturé, en C₁-C₂₂ ;
- p est un nombre entier valant 0 ou 1.

De préférence, ledit additif est de formule (I).

Avantageusement, R₁ et R₂ forment avec les atomes de carbone auxquels ils sont rattachés, le groupe de formule (III) suivante :

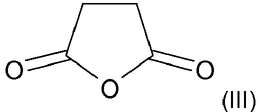

Avantageusement, R₈, R₉ et R₁₀ désignent l'atome d'hydrogène.

Selon un mode de réalisation particulier de l'invention, R₃ désigne l'atome d'hydrogène.

Préférentiellement, R₄ et R₅ désignent simultanément l'atome d'hydrogène.

De préférence, R₆ et R₇, identiques ou différents, représentent, indépendamment l'un de l'autre, l'atome d'hydrogène, le radical méthyle ou le radical éthyle, de préférence encore, R₆ et R₇ désignent simultanément l'atome d'hydrogène.

De manière préférée, D représente un radical alkyle, linéaire ou ramifié, de préférence linéaire, saturé ou insaturé, en C₁-C₁₄.

De manière préférée, D représente une chaîne hydrocarbonée linéaire, saturée ou insaturée, en C₁-C₂₂, de préférence en C₁-C₁₄.

Selon un mode de réalisation particulier de l'invention, p est égal à 0.

Selon un autre mode de réalisation particulier de l'invention, p est égal à 1.

De préférence, p est égal à 1 et G représente un radical alkylène linéaire ou ramifié, de préférence linéaire, saturé ou insaturé, en C₁-C₁₂.

Avantageusement, le nombre total d'atomes de carbone des groupes D et G va de 2 à 31, préférentiellement de 6 à 17, plus préférentiellement de 11 à 13.

Selon un mode de réalisation particulier de l'invention, l'additif de formule (I) est obtenu grâce à une réaction de Diels-Alder entre un composé diène et un composé diénophile (pour plus d'information, voir Breuer, T. E., (2000) « Dimer Acids », Kirk-Othmer Encyclopedia of Chemical Technology).

Avantageusement, ledit composé diène est un acide gras polyinsaturé, c'est-à-dire comportant au moins deux doubles liaisons.

Lesdits acides gras polyinsaturés sont de préférence des acides gras polyinsaturés comportant de 2 à 5 insaturations, de préférence de 2 à 4 insaturations et de préférence encore 2 ou 3 insaturations, et comportant de 5 à 36 atomes de carbone (C₅ à C₃₆), préférentiellement de 5 à 24 atomes de carbone (C₅ à C₂₄), plus préférentiellement de 10 à 22 atomes de carbone (C₁₀ à C₂₂), encore plus préférentiellement de 16 à 18 atomes de carbone (C₁₆ à C₁₈), et de manière particulièrement préférée de 18 atomes de carbone.

Parmi lesdits acides gras insaturés, on peut citer par exemple l'acide sorbique et les acides gras arachidoniques, linoléiques et linoléniques. Pour ces derniers, la réaction de Diels-Alder est alors précédée d'un réarrangement thermique intramoléculaire des doubles liaisons pour présenter une structure conjuguée apte à la réaction, selon les techniques classiques connues de l'homme du métier.

Avantageusement, ledit composé diénophile est choisi parmi les acides et diacides carboxyliques, sulfoniques, phosphoniques et anhydrides, lesdits acides et anhydrides comportant au moins une double liaison, de préférence une seule double liaison.

De manière préféré, ledit composé diénophile est un composé comprenant de 3 à 5 atomes de carbone, de préférence de 3 à 4 atomes de carbone.

En tant que composé diénophile, on peut citer par exemple l'acide acrylique, l'acide méthacrylique, l'acide crotonique, l'acide isocrotonique, les acides angéliques, les acides tigliques, l'acide maléique, l'anhydride maléique, l'acide vinylsulfonique, l'acide 2-propène-1-sulfonique et l'acide vinylphosphonique.

De manière préférée, ledit additif de formule (I) est choisi parmi les produits obtenus par réaction d'un acide linoléique avec l'acide acrylique, l'acide maléique ou l'anhydride maléique ou bien encore par réaction d'un acide linolénique avec l'acide acrylique, l'acide maléique ou l'anhydride maléique. On peut également envisager de faire réagir un ou plusieurs mélange(s) de diènes, comme par exemple des mélanges d'acides gras de « tall oil » (« Tall Oil Fatty Acid » (TOFA) en langue anglaise) avec un ou plusieurs diénophile(s), comme décrit précédemment, par exemple tels que l'acide acrylique, l'acide maléique ou l'anhydride maléique.

De préférence, ledit additif de formule (I), ou de formule (II), est choisi parmi l'acide 6-carboxy-4-hexyl-2-cyclohexène-1-octanoïque, l'acide 5-carboxy-4-hexyl-2-cyclohexène-1-octanoïque, l'acide 6-carboxy-4-pentyl-2-cyclohexène-1-nonanoïque, l'acide 5-carboxy-4-pentyl-2-cyclohexène-1-nonanoïque, et leurs mélanges ; l'acide 6-carboxy-6-méthyl-4-hexyl-2-cyclohexène-1-octanoïque, l'acide 5-carboxy-5-méthyl-4-hexyl-2-cyclohexène-1-octanoïque, l'acide 6-carboxy-6-méthyl-4-pentyl-2-cyclohexène-1-nonanoïque, l'acide 5-carboxy-5-méthyl-4-pentyl-2-cyclohexène-1-nonanoïque, et leurs mélanges ; l'acide 6-acide sulfonique-4-hexyl-2-cyclohexène-1-octanoïque, l'acide 5-acide sulfonique-4-hexyl-2-cyclohexène-1-octanoïque, l'acide 6-acide sulfonique-4-pentyl-2-cyclohexène-1-nonanoïque, l'acide 5-acide sulfonique-4-pentyl-2-cyclohexène-1-nonanoïque, et leurs mélanges ; l'acide 6-acide phosphonique-4-hexyl-2-cyclohexène-1-octanoïque, l'acide 5-acide phosphonique-4-hexyl-2-cyclohexène-1-octanoïque, l'acide 6-acide phosphonique-4-pentyl-2-cyclohexène-1-nonanoïque, l'acide 5-acide phosphonique-4-pentyl-2-cyclo-hexène-1-nonanoïque, et leurs mélanges ; l'acide 5,6-carboxy-4-hexyl-2-cyclohexène-1-octanoïque, l'acide 5,6-carboxy-4-pentyl-2-cyclohexène-1-nonanoïque, l'acide 5-anhydride carboxylique-4-hexyl-2-cyclohexène-1-octanoïque, l'acide 5-anhydride carboxylique-4-pentyl-2-cyclohexène-1-nonanoïque ; et leurs mélanges, de préférence parmi l'acide 6-carboxy-4-hexyl-2-cyclohexène-1-octanoïque, l'acide 5-carboxy-4-hexyl-2-cyclohexène-1-octanoïque, et leur mélange.

Selon un mode de réalisation particulier de l'invention, l'additif de formule (II) est obtenu par hydrogénation de l'additif de formule (I).

De préférence, la quantité dudit additif de formule (I), ou de formule (II), représente de 0,1 à 5% en poids, préférentiellement de 0,1 à 1% en poids, par rapport au poids total de la composition.

La composition telle que définie précédemment, peut être préparée selon toute méthode connue de l'homme du métier, par exemple par l'ajout de l'additif de formule (I), ou de formule (II), tels que définis précédemment, à un bitume, puis le mélange du bitume et dudit additif.

Un autre objet de l'invention est une émulsion bitumineuse comprenant au moins un bitume, au moins un additif de formule (I) ou de formule (II), tels que définis précédemment, et au moins une phase aqueuse contenant éventuellement au moins un tensioactif.

De préférence, l'émulsification est réalisée sous fort cisaillement. Cette émulsification sous fort cisaillement peut être effectuée à l'aide de tout appareillage connu de l'homme du métier. À titre d'exemple non limitatif, on peut citer les appareils de type moulin colloïdal, dont celui de la marque Atomix^{®} est un représentant.

De manière préférée, la quantité de bitume représente de 50 à 90% en poids, préférentiellement de 50 à 70%, plus préférentiellement de 60 à 70% en poids, par rapport au poids total de l'émulsion bitumineuse.

Avantageusement, la quantité d'additif de formule (I) tel que défini précédemment, représente de 0,1 à 5% en poids, préférentiellement de 0,1 à 3% en poids, plus préférentiellement de 0,1 à 2%, plus préférentiellement encore de 0,2 à 1,5% en poids, encore plus préférentiellement de 0,3 à 1% en poids, par rapport au poids total de l'émulsion bitumineuse.

Selon un mode de réalisation particulier de l'invention, l'émulsion bitumineuse selon l'invention comprend un ou plusieurs tensioactifs, de préférence des tensioactifs cationiques et/ou non ioniques, plus préférentiellement cationiques choisis parmi, à titre d'exemples non limitatifs, les alkylamidopolyamines, les alkylimidazolines et alkylimidazo(poly)amines, les lignine-amines, les alkylamido(poly)amines à chaîne grasse, les alkylpolyamines à chaîne grasse, les produits de réaction entre acide(s) carboxylique(s) gras ou huile(s) végétale(s) et des polyalkylènepolyamines. Les polyalkylènepolyamines peuvent être, à titre d'exemples non limitatifs, la diméthylaminopropylamine, la N-aminoéthylpipérazine, la diéthylènetriamine, la triéthylènetétramine, la tétraéthylènepentamine, et la pentaéthylènehexamine.

Les tensioactifs non ioniques qui peuvent être ajoutés à l'émulsion bitumineuse sont bien connus de l'homme du métier et peuvent être choisis parmi, à titre d'exemples non limitatifs, les alcools gras polyalcoxylés, les nonylphénolpolyalcoxylés ou autres composés polyalcoxylés, les alkylpolyglucosides, les copolymères à blocs oxyde d'éthylène/oxyde de propylène de masse molaire M_{w} de l'ordre de 4500 g/mol et de ratio massique oxyde d'éthylène/(oxyde d'éthylène + oxyde de propylène) de l'ordre de 40%, tels que ceux commercialisés par la société BASF sous la dénomination générique Pluronic^{®}, et par exemple le Pluronic^{®} P94, et autres.

Avantageusement, l'émulsion bitumineuse selon l'invention comprend un ou plusieurs additifs, autres que ceux de formule (I) et de formule (II), couramment utilisés dans le domaine, parmi lesquels on peut citer de manière non limitative, les agents viscosifiants, les latex naturels ou synthétiques, les épaississants, les agents fluxants, les plastifiants, ainsi que tout autre additif permettant d'ajuster les propriétés de l'émulsion, tels que les additifs de procédé cités dans le brevet EP1057873, par exemple les lignines, polymères, agents de salification, alcools, notamment alcools gras, et autres. Il est bien entendu que le(s) additif(s) cité(s) ci-dessus peu(ven)t être incorporé(s) dans la composition selon l'invention, ou encore un ou plusieurs des additifs cités ci-dessus peuvent être incorporés dans la composition bitumineuse avant l'ajout de l'eau pour la formation de l'émulsion, ou après l'ajout de l'eau.

L'invention a également pour objet un procédé de préparation d'une émulsion bitumineuse telle que définie précédemment comprenant au moins une étape de mélange :
- d'au moins un additif de formule (I), ou de formule (II), tels que définis précédemment,
- d'un bitume, et
- d'une phase aqueuse contenant éventuellement au moins un tensioactif.

De préférence, ladite étape de mélange est réalisée sous fort cisaillement.

Avantageusement, ledit procédé de préparation de l'émulsion bitumineuse selon l'invention est effectué selon les méthodes bien connues de l'homme du métier, et par exemple telles que décrites dans le manuel « Les émulsions de bitume » édité par la Revue Générale des Routes et des Aérodromes, RGRA, (2006).

Selon un mode de réalisation préféré de l'invention, ledit procédé comprend les étapes successives suivantes :
- le mélange dudit additif de formule (I), ou de formule (II), et d'un bitume ; puis
- le mélange d'une phase aqueuse contenant éventuellement au moins un tensioactif et de la solution obtenue à l'issue du mélange du bitume et dudit additif.

Selon un exemple de mise en oeuvre du procédé selon l'invention, on prépare à une température allant de 120 à 160°C un mélange d'un bitume et d'au moins un additif de formule (I), ou de formule (II), tels que définis précédemment, sous agitation avec par exemple un agitateur de type Rayneri bien connu de l'homme de l'art. On prépare également, à température ambiante, ou sous léger chauffage (de 40°C à 50°C maximum), une phase aqueuse par mélange d'au moins un tensioactif cationique qui peut être à titre d'exemple de type alkylamidopolyamine (par exemple Polyram^{®} L930 commercialisé par la société CECA S.A.) avec un acide de tout type connu de l'homme de l'art. De préférence, ledit acide est un acide fort, de manière indicative et non limitative un acide minéral fort, de préférence choisi parmi l'acide chlorhydrique et l'acide phosphorique, sans que cette liste soit limitative.

La composition obtenue à l'issue du mélange du bitume avec ledit additif (température de la composition allant par exemple de 140°C à 160°C) est ensuite mélangée sous fort cisaillement avec la phase aqueuse.

Selon un autre mode de réalisation préféré de l'invention, ledit procédé comprend les étapes successives suivantes :
- le mélange dudit additif de formule (I), ou de formule (II), et d'une phase aqueuse contenant éventuellement au moins un tensioactif ; puis
- le mélange de la solution obtenue à l'issue du mélange de la phase aqueuse et dudit additif, et du bitume.

Selon un exemple de mise en oeuvre du procédé selon l'invention, on prépare, à température ambiante, ou sous léger chauffage (de 40°C à 50°C maximum), un mélange d'au moins un additif de formule (I) tel que défini précédemment dans une phase aqueuse, typiquement de l'eau, contenant un tensioactif cationique de type alkylamidopolyamine (par exemple Polyram^{®} L930 commercialisé par la société CECA S.A.) puis ce mélange est acidifié (à pH allant de 1 et 5 et de préférence de 2 à 4) par ajout d'au moins un acide de tout type connu de l'homme de l'art. De préférence, ledit acide est un acide fort, de manière indicative et non limitative un acide minéral fort, de préférence choisi parmi l'acide chlorhydrique et l'acide phosphorique, sans que cette liste soit limitative.

La solution obtenue à l'issue du mélange de la phase aqueuse avec ledit additif est ensuite mélangée sous fort cisaillement avec au moins un bitume chaud (température du bitume allant par exemple de 140°C à 160°C).

Un autre objet de l'invention est un enrobé coulé à froid comprenant au moins une émulsion bitumineuse telle que définie précédemment, et des granulats.

Avantageusement, lesdits granulats sont de tout type connus de l'homme du métier. Parmi les granulats utilisables pour les enrobés coulés à froid selon l'invention, on peut notamment citer, de manière non limitative, les granulats de nature minéralogique, par exemple de nature éruptive, tels les granités, porphyres, de nature métamorphique, tels les schistes, les gneiss, et de nature sédimentaire de type siliceux, tels les silex, les quartzites, et de type carbonaté, tels les calcaires, les dolomites, mais aussi les agrégats d'enrobés (tels que les recyclats de chaussée, ou « recycled asphalt pavement » (RAP) en langue anglaise), les mâchefers, les bétons concassés, et autres, ainsi que les mélanges de tels granulats. Ces granulats peuvent bien entendu être additivés de ciment et/ou de chaux, selon les techniques connues de l'homme du métier.

L'invention concerne également l'utilisation de l'additif de formule (I) ou de formule (II) tels que définis précédemment pour la préparation d'un enrobé coulé à froid, tel que défini précédemment.

L'invention concerne également l'utilisation de l'additif de formule (I) ou de formule (II) tels que définis précédemment pour accélérer la montée en cohésion d'un enrobé coulé à froid tel que mentionné ci-avant.

L'invention concerne également l'utilisation de la composition telle que définie précédemment pour accélérer la montée en cohésion d'un enrobé coulé à froid tel que mentionné ci-avant.

L'invention est illustrée par les exemples suivants nullement limitatifs.

### EXEMPLES

### Exemple 1

### 1. Préparation de trois émulsions bitumineuses

Trois émulsions bitumineuses sont fabriquées avec un pilote d'émulsification de marque Emulbitume^{®} équipé d'un moulin colloïdal de type Atomix C.

Les trois émulsions bitumineuses contiennent 60% en poids de bitume, de pénétrabilité 70/100, provenant de la raffinerie Total de Grandpuits, par rapport au poids total de l'émulsion.

Les émulsions d'enrobage préparées sont des émulsions d'enrobage lentes de type C60B6 selon la norme NF EN 13808 d'Août 2013.

La phase aqueuse est préparée en mélangeant :
- 25 g d'émulsifiant de type alkylamidopolyamine grasse de nom Polyram^{®} L920 commercialisé par la société CECA S.A. ;
- 1947 g d'eau ;
- 28 g d'acide chlorhydrique à 32%.

La composition des trois émulsions bitumineuses est indiquée dans le Tableau 1 ci-dessous (les pourcentages sont exprimés par rapport au poids total de l'émulsion) :

**-- Tableau 1 --**

| ***Type d'émulsions*** | ***Emulsion 1 (comp.)*** | ***Emulsion 2 (comp.)*** | ***Emulsion 3 (inv.)*** |
|---|---|---|---|
| bitume (% en poids) | 60 | 60 | 60 |
| phase aqueuse (% en poids) | qs | qs | qs |
| Acide gras polymérisé Pripol 1017^{®} (% en poids) | - | 0,6 | - |
| Additif Cecabase^{®} FC+ (% en poids) | - | - | 0,6 |

L'additif Cecabase^{®} FC+ comprend 45% en poids d'acide oléique et 55% en poids d'un mélange comprenant l'acide 6-carboxy-4-hexyl-2-cyclohexène-1-octanoïque et l'acide 5-carboxy-4-hexyl-2-cyclohexène-1-octanoïque.

L'acide gras polymérisé Pripol 1017^{®} comprend, selon la fiche technique du fournisseur CRODA, environ 2% en poids de monomère d'acide gras, 78% en poids de dimère d'acide gras et 20% en poids de trimère d'acide gras.

Les additifs (l'acide gras polymérisé Pripol 1017^{®} pour l'émulsion 2, et l'additif Cecabase^{®} FC+ pour l'émulsion 3) sont introduits dans le bitume chaud, chauffé à environ 140°C, sous agitation. Le mélange est laissé sous agitation pendant 15 minutes pour homogénéisation avant émulsification.

L'émulsification est réalisée de façon standard avec un pilote Emulbitume fonctionnant en continu au débit de 60 litres/h. Le mélange bitume/phase aqueuse au ratio massique (60/40) est introduit dans un atomix C au moyen de deux circuits séparés alimentés par deux pompes.

### 2. Préparation de trois enrobés coulés à froid

Trois enrobés coulés à froid sont préparés à partir des trois émulsions bitumineuses mentionnées ci-dessus.

Les trois enrobés ont été préparés avec des granulats provenant de la carrière de Piasek en Pologne. Le mélange granulaire est un mélange de 50% en poids de granulats de classe granulométrique 0-2 cm, et 50% en poids de granulats de classe granulométrique 2-8 cm.

La quantité d'eau ajoutée aux agrégats secs varie de 7 à 8 g et est ajustée en fonction du système de manière à maintenir un temps de malaxage aux alentours de 100 ± 10 secondes.

Il est entendu dans les présents exemples, par temps de malaxage, le temps pendant lequel le mélange comprenant les granulats, le ciment, l'eau et l'émulsion, reste fluide sous agitation.

La composition des trois enrobés coulés à froid est indiquée dans le tableau 2 ci-dessous :

**-- Tableau 2 --**

| ***Type d'enrobés*** | ***Enrobé 1 (comp.)*** | ***Enrobé 2 (comp.)*** | ***Enrobé 3 (inv.)*** |
|---|---|---|---|
| Emulsion 1 (g) | 12 | - | - |
| Emulsion 2 (g) | - | 12 | - |
| Emulsion 3 (g) | - | - | 12 |
| Mélange granulaire (g) | 100 | 100 | 100 |
| Ciment (CEM II) | 1 | 1 | 1 |
| Eau (g) | 7 | 8 | 8 |

### 3. Evaluation de la résistance interne des trois enrobés coulés à froid

La cohésion interne de chacun des trois enrobés est évaluée à l'aide du test HCT « Hilt Cohésion Test », décrit dans le guide de l'IDRRIM, sur les « Matériaux Bitumineux Coulés à Froid », (2015).

Ce test permet d'évaluer la résistance à la traction et à la flexion de l'enrobé testé.

Des éprouvettes d'enrobés coulés à froid (ECF), aussi appelés MBCF (Matériaux Bitumineux Coulés à Froid) de dimension 120*120*15 mm sont fabriquées en coulant 400 g d'enrobé coulé à froid dans un moule de 120*120 mm aux bords amovibles. Après prise de l'enrobé, les bords du moule sont retirés avec précaution et l'éprouvette est laissée à température ambiante pour mûrissement pendant un temps déterminé (ici 2 h).

Le test a été pratiqué sur une table, le principe étant de mettre la moitié de l'éprouvette dans le vide pendant que l'autre moitié est maintenue sur un support. L'éprouvette est positionnée en bord de table sur un support plastique en deux parties égales non solidaires. Un contrepoids est placé sur la partie qui reste sur la table. L'autre moitié de l'éprouvette est glissée au-dessus du vide, et le support sous cette partie est retiré.

On mesure alors le temps nécessaire à la cassure de l'enrobé après que la moitié de l'éprouvette ait été placée au-dessus du vide. Le résultat (en secondes) représente la valeur de cohésion HCT après un temps de mûrissement défini, dans des conditions de température et d'hygrométrie connues. Plus la durée est élevée (en conditions de mûrissement équivalentes), plus l'enrobé coulé à froid est résistant et donc plus la montée en cohésion est avancée.

Les résultats de temps de cassure après 2 heures de mûrissement à 20°C obtenus sur les enrobés coulés à froid fabriqués à partir des trois émulsions sont présentés dans le tableau 3 ci-dessous :

**-- Tableau 3 --**

| ***Type d'enrobés*** | ***Enrobé 1 (comp.)*** | ***Enrobé 2 (comp.)*** | ***Enrobé 3 (inv.)*** |
|---|---|---|---|
| Temps de cassure (secondes) | 5 | 180 | 260 |

Le temps de cassure de l'enrobé 3 selon l'invention est significativement supérieur aux temps de cassure des deux autres enrobés.

Un enrobé comprenant l'additif de formule (I) selon l'invention présente donc, après deux heures de mûrissement, une cohésion très élevée, meilleure que celle obtenue pour un enrobé sans additif ou un enrobé comprenant un additif décrit dans l'art antérieur, tel qu'un acide gras polymérisé.

### Exemple 2

### 1. Préparation de trois émulsions bitumineuses

Trois émulsions bitumineuses sont fabriquées avec un pilote d'émulsification de marque Emulbitume^{®} équipé d'un moulin colloïdal de type Atomix C.

Les trois émulsions bitumineuses contiennent 60% en poids de bitume paraffinique, de pénétrabilité 70/100, provenant de la raffinerie Total de Gonfreville, par rapport au poids total de l'émulsion.

Les émulsions d'enrobage préparées sont des émulsions d'enrobage lentes de type C60B6 selon la norme NF EN 13808 d'Août 2013.

Le dosage en émulsifiant dans l'émulsion est de 8 kg/t d'une polyamine de Suif de nom commercial Polyram^{®} S, et de 8 kg/t d'un co-émulsifiant de type ammonium quaternaire commercialisé sous le nom Stabiram^{®} MS8 par la société CECA S.A.

Le pH de la phase aqueuse a été ajusté à 2 avec de l'acide chlorhydrique à 32%.

La composition des trois émulsions bitumineuses est indiquée dans le tableau 4 ci-dessous (les pourcentages sont exprimés par rapport au poids total de l'émulsion) :

**-- Tableau 4 --**

| ***Type d'émulsion*** | ***Emulsion 4 (comp.)*** | ***Emulsion 5 (inv.)*** | ***Emulsion 6 (inv.)*** |
|---|---|---|---|
| Bitume (% en poids) | 60 | 60 | 60 |
| phase aqueuse (% en poids) | qs | qs | qs |
| Additif Cecabase^{®} FC+ (% en poids) | - | 0,6 | 0,6 |
| Introduction de l'additif Cecabase^{®} FC+ dans | - | le bitume | la phase aqueuse |

Lors de la préparation de l'émulsion 5 selon l'invention, l'additif Cecabase^{®} FC+ est introduit dans le bitume chaud, chauffé à environ 140°C, sous agitation. Le mélange est laissé sous agitation pendant 15 minutes pour homogénéisation avant émulsification.

La phase aqueuse est préparée à 40°C par mélange de la polyamine de Suif Polyram^{®} S, du co-émulsifiant Stabiram^{®} MS8, et de l'acide chlorhydrique.

Lors de la préparation de l'émulsion 6 selon l'invention, l'additif Cecabase^{®} FC+ est introduit dans la phase aqueuse, préparée par mélange de la polyamine de Suif Polyram^{®} S, du co-émulsifiant Stabiram^{®} MS8, et de l'acide chlorhydrique.

Le bitume est chauffé à environ 140°C avant émulsification.

Dans tous les cas, l'émulsification est réalisée de façon standard avec un pilote Emulbitume fonctionnant en continu au débit de 60 litres/h. Le mélange bitume/phase aqueuse au ratio massique (60/40) est introduit dans un atomix C au moyen de deux circuits séparés alimentés par deux pompes.

### 2. Préparation de quatre enrobés coulés à froid

Les quatre enrobés ont été préparés avec des granulats siliceux provenant de la carrière Vignat. Le mélange granulaire est un mélange de 50% en poids de granulats de classe granulométrique 0-2 cm, et 50% en poids de granulats de classe granulométrique 2-6 cm.

La quantité d'eau ajoutée aux agrégats secs varie de 9 à 10 g et est ajustée en fonction du système de manière à maintenir un temps de malaxage aux alentours de 90 ± 10 secondes.

L'enrobé 4 (comparatif) est préparé à partir de l'émulsion 4.

L'enrobé 5 (comparatif) est préparé à partir de l'émulsion 4 et 0,6% en poids de Cecabase^{®} FC+ a été ajouté dans l'eau de prémouillage des granulats sous forme de suspension à 10% dans l'eau.

L'enrobé 6 selon l'invention est préparé à partir de l'émulsion 5. L'enrobé 7 selon l'invention est préparé à partir de l'émulsion 6.

La composition des quatre enrobés coulés à froid est indiquée dans le tableau 5 ci-dessous :

**-- Tableau 5 --**

| ***Type d'enrobés*** | ***Enrobé 4 (comp.)*** | ***Enrobé 5 (comp.)*** | ***Enrobé 6 (inv.)*** | ***Enrobé 7 (inv.)*** |
|---|---|---|---|---|
| Emulsion 4 (g) | 12 | - | - | - |
| Emulsion 4 (g) | - | 12 | - | - |
| Emulsion 5 (g) | - | - | 12 | - |
| Emulsion 6 (g) | - | - | - | 12 |
| Additif Cecabase^{®} FC+** (% en poids) | - | 0,6 | - | - |
| Mélange granulaire (g) | 100 | 100 | 100 | 100 |
| Ciment (CEM II) (g) | 0,5 | 0,5 | 0,5 | 0,5 |
| Eau (g) | 9 | 9 | 10 | 9 |

| | | | | |
|---|---|---|---|---|
| ** L'additif a été introduit dans l'eau de prémouillage des granulats, comme indiqué ci-dessus. | | | | |

### 3. Evaluation de la montée en cohésion des quatre enrobés coulés à froid

La montée en cohésion de chacun des quatre enrobés est évaluée à l'aide d'un cohésivimètre BENEDICT selon la norme ASTM D3910 (1998). Les agrégats, le ciment, l'eau d'apport et l'émulsion sont mélangés avec une spatule pendant 40 secondes. Le mélange est coulé dans un moule, tel que décrit dans la norme, sur un support bitumineux. Après la rupture de l'émulsion, le moule est retiré délicatement, et l'éprouvette ainsi fabriquée est laissée à température ambiante pour mûrissement. Le couple résistant des éprouvettes est mesuré avec le cohésivimètre à intervalles réguliers. Plus le couple est élevé, meilleure est la cohésion de l'enrobé.

Ce test permet de déterminer une durée de réouverture au trafic en mesurant le temps de mûrissement nécessaire pour obtenir une valeur seuil de couple. Il est généralement admis par l'homme de l'art qu'une ouverture au trafic est possible autour d'une valeur de 20 kg.cm.

Les couples sont mesurés à intervalles réguliers pendant une période de 90 minutes de mûrissement à 20°C. Les résultats sont présentés dans le tableau 6 ci-dessous :

**-- Tableau 6 --**

| ***Type d'enrobés*** | ***Enrobé 4 (comp.)*** | ***Enrobé 5 (comp.)*** | ***Enrobé 6 (inv.)*** | ***Enrobé 7 (inv.)*** |
|---|---|---|---|---|
| Couple (en kg.cm) après 15 minutes | 10 | 12 | 16 | 15 |
| Couple (en kg.cm) après 30 minutes | 16 | 18 | 20 | 20 |
| Couple (en kg.cm) après 60 minutes | 19 | 20 | 22 | 21 |
| Couple (en kg.cm) après 90 minutes | 21 | 22 | 24 | 22 |

Ainsi, les enrobés 6 et 7, comprenant l'additif de formule (I) selon l'invention, présentent un couple de 20 kg.cm après seulement 30 minutes de mûrissement. En particulier, l'enrobé 6, comprenant l'émulsion 5 qui a été préparée par introduction de l'additif de formule (I) dans le bitume, présente les meilleurs résultats.

Les résultats indiquent donc clairement que l'utilisation de l'additif de formule (I) selon l'invention permet de raccourcir le temps d'ouverture au trafic d'au moins 30 minutes, par rapport aux solutions connues de l'art antérieur.

## Revendications

1. Composition comprenant au moins un bitume et au moins un additif choisi parmi les composés de formule (I) suivante et les composés de formule (II) suivante : 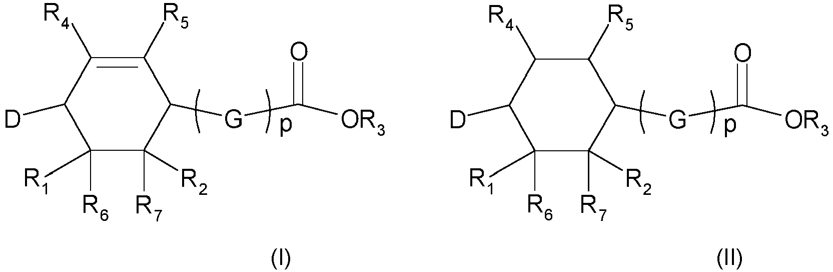 dans lesquelles :
- R₁ et R₂ représentent, indépendamment l'un de l'autre, un groupe choisi parmi -(A1)_{q1}-S(O)₂OR₈, -(A2)_{q2}-P(O)(OR₉)₂ -(A3)_{q3}-C(O)OR₁₀, ou bien
- R₁ représente l'atome d'hydrogène et R₂ représente un groupe choisi parmi -(A1)_{q1}-S(O)₂OR₈, -(A2)_{q2}-P(O)(OR₉)₂ -(A3)_{q3}-C(O)OR₁₀, ou bien
- R₂ représente l'atome d'hydrogène et R₁ représente un groupe choisi parmi -(A1)_{q1}-S(O)₂OR₈, -(A2)_{q2}-P(O)(OR₉)₂ -(A3)_{q3}-C(O)OR₁₀,
• R₈, R₉ et R₁₀, identiques ou différents, représentent, indépendamment l'un de l'autre, un atome d'hydrogène ou un radical alkyle, linéaire ou ramifié, saturé ou insaturé, en C₁-C₂₂,
• A1, A2 et A3, identiques ou différents, représentent, indépendamment l'un de l'autre, un radical alkylène, linéaire ou ramifié, en C₁-C₄, de préférence en C₁-C₂, de préférence encore en C₁,
• q1, q2 et q3, identiques ou différents, représentent, indépendamment l'un de l'autre, un nombre entier valant 0 ou 1,
- ou R₁ et R₂ forment avec les atomes de carbone auxquels ils sont rattachés un hétérocycle à 5 chainons,
- R₃ représente un atome d'hydrogène ou un radical alkyle, linéaire ou ramifié, saturé ou insaturé, en C₁-C₂₂ ;
- R₄ et R₅, identiques ou différents, représentent, indépendamment l'un de l'autre, un atome d'hydrogène, ou un radical alkyle, linéaire ou ramifié, saturé ou insaturé, en C₁-C₂₂ ;
- R₆ et R₇, identiques ou différents, représentent, indépendamment l'un de l'autre, un atome d'hydrogène ou un radical alkyle, linéaire ou ramifié, saturé ou insaturé, en C₁-C₄, de préférence en C₁ ou en C₂ ou en C₃;
- D représente un atome d'hydrogène ou un radical alkyle, linéaire ou ramifié, saturé ou insaturé, en C₁-C₂₂;
- G représente un radical alkylène, linéaire ou ramifié, saturé ou insaturé, en C₁-C₂₂ ;
- p est un nombre entier valant 0 ou 1.

2. Composition selon la revendication 1, dans laquelle R₁ et R₂ forment avec les atomes de carbone auxquels ils sont rattachés, le groupe de formule (III) suivante :

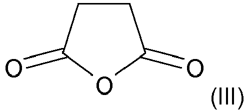

3. Composition selon la revendication 1 ou 2, dans laquelle R₃ désigne l'atome d'hydrogène.

4. Composition selon l'une quelconque des revendications précédentes, dans laquelle R₄ et R₅ désignent simultanément l'atome d'hydrogène.

5. Composition selon l'une quelconque des revendications précédentes, dans laquelle R₆ et R₇, identiques ou différents, représentent, indépendamment l'un de l'autre, l'atome d'hydrogène, le radical méthyle ou le radical éthyle, de préférence encore, R₆ et R₇ désignent simultanément l'atome d'hydrogène.

6. Composition selon l'une quelconque des revendications précédentes, dans laquelle ledit additif de formule (I), ou de formule (II), est choisi parmi l'acide 6-carboxy-4-hexyl-2-cyclohexène-1-octanoïque, l'acide 5-carboxy-4-hexyl-2-cyclohexène-1-octanoïque, l'acide 6-carboxy-4-pentyl-2-cyclohexène-1-nonanoïque, l'acide 5-carboxy-4-pentyl-2-cyclohexène-1-nonanoïque, et leurs mélanges ; l'acide 6-carboxy-6-méthyl-4-hexyl-2-cyclohexène-1-octanoïque, l'acide 5-carboxy-5-méthyl-4-hexyl-2-cyclohexène-1-octanoïque, l'acide 6-carboxy-6-méthyl-4-pentyl-2-cyclohexène-1-nonanoïque, l'acide 5-carboxy-5-méthyl-4-pentyl-2-cyclohexène-1-nonanoïque, et leurs mélanges ; l'acide 6-acide sulfonique-4-hexyl-2-cyclohexène-1-octanoïque, l'acide 5-acide sulfonique-4-hexyl-2-cyclohexène-1-octanoïque, l'acide 6-acide sulfonique-4-pentyl-2-cyclohexène-1-nonanoïque, l'acide 5-acide sulfonique-4-pentyl-2-cyclohexène-1-nonanoïque, et leurs mélanges ; l'acide 6-acide phosphonique-4-hexyl-2-cyclohexène-1-octanoïque, l'acide 5-acide phosphonique-4-hexyl-2-cyclohexène-1-octanoïque, l'acide 6-acide phosphonique-4-pentyl-2-cyclohexène-1-nonanoïque, l'acide 5-acide phosphonique-4-pentyl-2-cyclohexène-1-nonanoïque, et leurs mélanges ; l'acide 5,6-carboxy-4-hexyl-2-cyclohexène-1-octanoïque, l'acide 5,6-carboxy-4-pentyl-2-cyclohexène-1-nonanoïque l'acide 5-anhydride carboxylique-4-hexyl-2-cyclohexène-1-octanoïque, l'acide 5-anhydride carboxylique-4-pentyl-2-cyclohexène-1-nonanoïque ; et leurs mélanges, de préférence parmi l'acide 6-carboxy-4-hexyl-2-cyclohexène-1-octanoïque, l'acide 5-carboxy-4-hexyl-2-cyclohexène-1-octanoïque, et leur mélange.

7. Composition selon l'une quelconque des revendications précédentes, dans laquelle la quantité dudit additif de formule (I), ou de formule (II), représente de 0,1 à 5% en poids, préférentiellement de 0,1 à 1% en poids, par rapport au poids total de la composition.

8. Émulsion bitumineuse comprenant au moins un bitume, au moins un additif de formule (I), ou de formule (II), tels que définis à l'une quelconque des revendications 1 à 7, et au moins une phase aqueuse contenant éventuellement au moins un tensioactif.

9. Émulsion bitumineuse selon la revendication 8, dans laquelle la quantité d'additif de formule (I), ou de formule (II), tels que définis à l'une quelconque des revendications 1 à 7, représente de 0,1 à 5% en poids, préférentiellement de 0,1 à 3%, plus préférentiellement de 0,1 à 2%, plus préférentiellement encore de 0,2 à 1,5% en poids, encore plus préférentiellement de 0,3 à 1% en poids, par rapport au poids total de l'émulsion.

10. Procédé de préparation d'une émulsion bitumineuse telle que définie à la revendication 8 ou 9 comprenant au moins une étape de mélange:
- d'au moins un additif de formule (I), ou de formule (II), tels que définis à l'une quelconque des revendications 1 à 7,
- d'un bitume, et
- d'une phase aqueuse contenant éventuellement au moins un tensioactif.

11. Procédé selon la revendication 10, comprenant les étapes successives suivantes :
- le mélange dudit additif de formule (I), ou de formule (II), et d'un bitume ; puis
- le mélange d'une phase aqueuse contenant éventuellement au moins un tensioactif et de la solution obtenue à l'issue du mélange du bitume et dudit additif.

12. Procédé selon la revendication 10, comprenant les étapes successives suivantes :
- le mélange dudit additif de formule (I), ou de formule (II), et d'une phase aqueuse contenant éventuellement au moins un tensioactif ; puis
- le mélange de la solution obtenue à l'issue du mélange de la phase aqueuse et dudit additif, et du bitume.

13. Enrobé coulé à froid comprenant au moins une émulsion telle que définie à la revendication 8 ou 9, et des granulats.

14. Utilisation de l'additif de formule (I), ou de formule (II), tels que définis à l'une quelconque des revendications 1 à 7 pour la préparation d'un enrobé coulé à froid tel que défini à la revendication 13.

## Claims

1. Composition comprising at least one bitumen and at least one additive chosen from the compounds of formula (I) below and the compounds of formula (II) below: 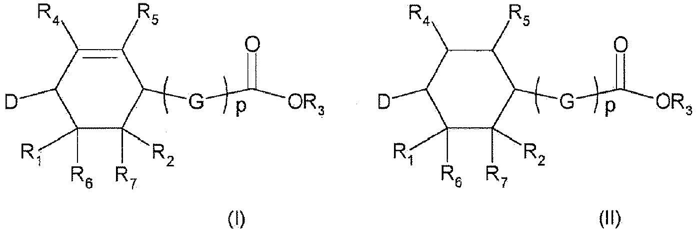 in which:
- R₁ and R₂ represent, independently of one another, a group chosen from -(A1)_{q1}-S(O)₂OR₈, - (A2)_{q2}-P(O)(OR₉)₂-(A3)_{q3}-C(O)OR₁₀, or else
- R₁ represents a hydrogen atom and R₂ represents a group chosen from -(A1)_{q1}-S(O)₂OR₈,-(A2)_{q2}-P(O)(OR₉)₂-(A3)_{q3}-C(O)OR₁₀, or else
- R₂ represents a hydrogen atom and R₁ represents a group chosen from -(A1)_{q1}-S(O)₂OR₈,-(A2)_{q2}-P(O)(OR₉)- (A3)_{q3}-C(O)OR₁₀,
• R₈, R₉ and R₁₀, which may be identical or different, represent, independently of one another, a hydrogen atom or a linear or branched, saturated or unsaturated C₁-C₂₂ alkyl radical,
• A1, A2 and A3, which may be identical or different, represent, independently of one another, a linear or branched C₁-C₄, preferably C₁-C₂, more preferably C₁, alkylene radical,
• q1, q2 and q3, which may be identical or different, represent, independently of one another, an integer equal to 0 or 1,
- or R₁ and R₂ form, with the carbon atoms to which they are attached, a heterocycle comprising 5 ring members,
- R₃ represents a hydrogen atom or a linear or branched, saturated or unsaturated C₁-C₂₂ alkyl radical;
- R₄ and R₅, which may be identical or different, represent, independently of one another, a hydrogen atom or a linear or branched, saturated or unsaturated C₁-C₂ alkyl radical;
- R₆ and R₇, which may be identical or different, represent, independently of one another, a hydrogen atom or a linear or branched, saturated or unsaturated C₁-C₄, preferably C₁ or C₂ or C₃, alkyl radical;
- D represents a hydrogen atom or a linear or branched, saturated or unsaturated C₁-C₂₂ alkyl radical;
- G represents a linear or branched, saturated or unsaturated C₁-C₂₂ alkylene radical;
- p is an integer equal to 0 or 1.

2. Composition according to Claim 1, in which R₁ and R₂ form, with the carbon atoms to which they are attached, the group of formula (III) below:

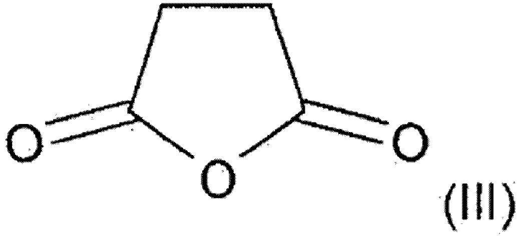

3. Composition according to Claim 1 or 2, in which R₃ denotes a hydrogen atom.

4. Composition according to any one of the preceding claims, in which R₄ and R₅ simultaneously denote a hydrogen atom.

5. Composition according to any one of the preceding claims, in which R₆ and R₇, which may be identical or different, represent, independently of one another, a hydrogen atom, the methyl radical or the ethyl radical, more preferably R₆ and R₇ simultaneously denote a hydrogen atom.

6. Composition according to any one of the preceding claims, in which said additive of formula (I), or of formula (II), is chosen from 6-carboxy-4-hexyl-2-cyclohexene-1-octanoic acid, 5-carboxy-4-hexyl-2-cyclohexene-1-octanoic acid, 6-carboxy-4-pentyl-2-cyclohexene-1-nonanoic acid, 5-carboxy-4-pentyl-2-cyclohexene-1-nonanoic acid, and mixtures thereof; 6-carboxy-6-methyl-4-hexyl-2-cyclohexene-1-octanoic acid, 5-carboxy-5-methyl-4-hexyl-2-cyclohexene-1-octanoic acid, 6-carboxy-6-methyl-4-pentyl-2-cyclohexene-1-nonanoic acid, 5-carboxy-5-methyl-4-pentyl-2-cyclohexene-1-nonanoic acid, and mixtures thereof; 6-sulfo-4-hexyl-2-cyclohexene-1-octanoic acid, 5-sulfo-4-hexyl-2-cyclohexene-1-octanoic acid, 6-sulfo-4-pentyl-2-cyclohexene-1-nonanoic acid, 5-sulfo-4-pentyl-2-cyclohexene-1-nonanoic acid, and mixtures thereof; 6-phosphono-4-hexyl-2-cyclohexene-1-octanoic acid, 5-phosphono-4-hexyl-2-cyclohexene-1-octanoic acid, 6-phosphono-4-pentyl-2-cyclohexene-1-nonanoic acid, 5-phosphono-4-pentyl-2-cyclohexene-1-nonanoic acid, and mixtures thereof; 5,6-carboxy-4-hexyl-2-cyclohexene-1-octanoic acid, 5,6-carboxy-4-pentyl-2-cyclohexene-1-nonanoic acid, 5-carboxylic anhydride-4-hexyl-2-cyclohexene-1-octanoic acid, 5-carboxylic anhydride-4-pentyl-2-cyclohexene-1-nonanoic acid, and mixtures thereof; preferably from 6-carboxy-4-hexyl-2-cyclohexene-1-octanoic acid, 5-carboxy-4-hexyl-2-cyclohexene-1-octanoic acid, and a mixture thereof.

7. Composition according to any one of the preceding claims, in which the amount of said additive of formula (I), or of formula (II), represents from 0.1% to 5% by weight, preferentially from 0.1% to 1% by weight, relative to the total weight of the composition.

8. Bituminous emulsion comprising at least one bitumen, at least one additive of formula (I) or of formula (II), as defined in any one of Claims 1 to 7, and at least one aqueous phase optionally containing at least one surfactant.

9. Bituminous emulsion according to Claim 8, in which the amount of additive of formula (I) or of formula (II), as defined in any one of Claims 1 to 7, represents from 0.1% to 5% by weight, preferentially from 0.1% to 3%, more preferentially from 0.1% to 2%, even more preferentially from 0.2% to 1.5% by weight, even more preferentially from 0.3% to 1% by weight, relative to the total weight of the emulsion.

10. Process for producing a bituminous emulsion as defined in Claim 8 or 9, comprising at least one step of mixing:
- at least one additive of formula (I), or formula (II), as defined in any one of claims 1 to 7,
- a bitumen, and
- an aqueous phase optionally containing at least one surfactant.

11. Process according to Claim 10, comprising the following successive steps:
- mixing said additive of formula (I), or formula (II), and a bitumen; then
- mixing an aqueous phase optionally containing at least one surfactant and the solution obtained at the end of the mixing of the bitumen and said additive.

12. Process according to Claim 10, comprising the following successive steps:
- mixing said additive of formula (I), or formula (II), and an aqueous phase optionally containing at least one surfactant; then
- mixing the solution obtained at the end of the mixing of the aqueous phase and of said additive, with the bitumen.

13. Cold-poured mix comprising at least one emulsion as defined in Claim 8 or 9 and aggregates.

14. Use of the additive of formula (I) or formula (II), as defined in any one of Claims 1 to 7, for producing a cold-poured mix as defined in Claim 13.

## Patentansprüche

1. Zusammensetzung, die mindestens ein Bitumen sowie mindestens ein Additiv umfasst, welches aus den Verbindungen der folgenden Formel (I) und den Verbindungen der folgenden Formel (II) ausgewählt ist: 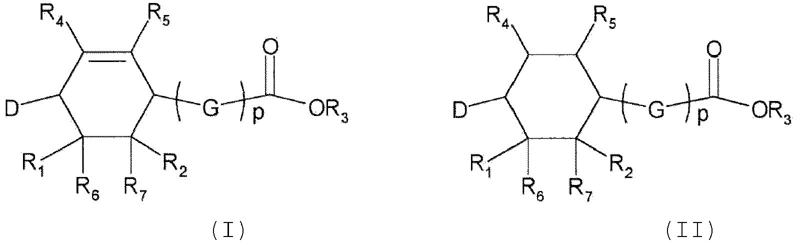 wobei:
- R₁ und R₂ unabhängig voneinander für eine Gruppe stehen, die aus -(A1)_{q1}-S(O)₂OR₈, (A2)_{q2}-P(O)(OR₉)₂ -(A3)_{q3}-C(O)OR₁₀ ausgewählt ist, oder
- R₁ für das Wasserstoffatom steht und R₂ für eine Gruppe steht, die aus -(A1)_{q1}-S(O)₂OR₈, -(A2)_{q2}-P(O)(OR₉)₂-(A3)_{q3}-C(O)OR₁₀ ausgewählt ist, oder
- R₂ für das Wasserstoffatom steht und R₁ für eine Gruppe steht, die aus -(A1)_{q1}-S(O)₂OR₈, -(A2)_{q2}-P(O)(OR₉)₂-(A3)_{q3}-C(O)OR₁₀ ausgewählt ist,
• R₈, R₉ und R₁₀, die vollkommen gleichartig oder verschiedenartig sind, unabhängig voneinander für ein Wasserstoffatom oder einen gesättigten oder ungesättigten C₁-C₂₂-Alkylrest geradkettiger oder verzweigter Art stehen,
• A1, A2 und A3, die vollkommen gleichartig oder verschiedenartig sind, unabhängig voneinander für einen Alkylenrest geradkettiger oder verzweigter Art stehen, dessen Länge C₁-C₄, vorzugsweise C₁-C₂, stärker bevorzugt C₁ beträgt,
• q1, q2 und q3, die vollkommen gleichartig oder verschiedenartig sind, unabhängig voneinander für eine ganze Zahl stehen, welche gleich 0 oder 1 ist,
- oder R₁ und R₂ mit den Kohlenstoffatomen, an welche sie gebunden sind, eine heterozyklische Verbindung mit 5 Kettengliedern bilden,
- R₃ für ein Wasserstoffatom oder einen gesättigten oder ungesättigten C₁-C₂₂-Alkylrest geradkettiger oder verzweigter Art steht;
- R₄ und R₅, die vollkommen gleichartig oder verschiedenartig sind, unabhängig voneinander für ein Wasserstoffatom oder einen gesättigten oder ungesättigten C₁-C₂₂-Alkylrest geradkettiger oder verzweigter Art stehen,
- R₆ und R₇, die vollkommen gleichartig oder verschiedenartig sind, unabhängig voneinander für ein Wasserstoffatom oder einen gesättigten oder ungesättigten Alkylrest geradkettiger oder verzweigter Art stehen, dessen Länge C₁-C₄, vorzugsweise C₁ oder C₂ oder C₃ beträgt;
- D für ein Wasserstoffatom oder einen gesättigten oder ungesättigten C₁-C₂₂-Alkylrest geradkettiger oder verzweigter Art steht;
- G für einen gesättigten oder ungesättigten C₁-C₂₂-Alkylenrest geradkettiger oder verzweigter Art steht;
- p für eine ganze Zahl steht, die gleich 0 oder 1 ist.

2. Zusammensetzung nach Anspruch 1, wobei R₁ und R₂ mit den Kohlenstoffatomen, an welche sie gebunden sind, die Gruppe nach der folgenden Formel (III) bilden:

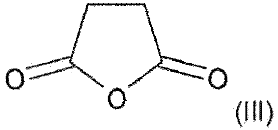

3. Zusammensetzung nach Anspruch 1 und 2, wobei R₃ das Wasserstoffatom bezeichnet.

4. Zusammensetzung nach einem beliebigen der vorhergehenden Ansprüche, wobei sowohl R₄ als auch R₅ das Wasserstoffatom bezeichnen.

5. Zusammensetzung nach einem beliebigen der vorhergehenden Ansprüche, wobei R₆ und R₇, die vollkommen gleichartig oder verschiedenartig sind, unabhängig voneinander für das Wasserstoffatom, den Methylrest oder den Ethylrest stehen, wobei stärker bevorzugt sowohl R₆ als auch R₇ das Wasserstoffatom bezeichnen.

6. Zusammensetzung nach einem beliebigen der vorhergehenden Ansprüche, wobei das Additiv nach Formel (I), oder nach Formel (II), aus 6-Carboxy-4-hexyl-2-cyclohexen-1-octansäure, 5-Carboxy-4-hexyl-2-cyclohexen-1-octansäure, 6-Carboxy-4-pentyl-2-cyclohexen-1-nonansäure, 5-Carboxy-4-pentyl-2-cyclohexen-1-nonansäure, und deren Mischungen; 6-Carboxy-6-methyl-4-hexyl-2-cyclohexen-1-octansäure, 5-Carboxy-5-methyl-4-hexyl-2-cyclohexen-1-octansäure, 6-Carboxy-6-methyl-4-pentyl-2-cyclohexen-1-nonansäure, 5-Carboxy-5-methyl-4-pentyl-2-cyclohexen-1-nonansäure, und deren Mischungen; 6-Sulfonsäure-4-hexyl-2-cyclohexen-1-octansäure, 5-Sulfonsäure-4-hexyl-2-cyclohexen-1-octansäure, 6-Sulfonsäure-4-pentyl-2-cyclohexen-1-nonansäure, 5-Sulfonsäure-4-pentyl-2-cyclohexen-1-nonansäure, und deren Mischungen; 6-Phosphonsäure-4-hexyl-2-cyclohexen-1-octansäure, 5-Phosphonsäure-4-hexyl-2-cyclohexen-1-octansäure, 6-Phosphonsäure-4-pentyl-2-cyclohexen-1-nonansäure, 5-Phosphonsäure-4-pentyl-2-cyclohexen-1-nonansäure, und deren Mischungen; 5,6-Carboxy-4-hexyl-2-cyclohexen-1-octansäure, 5,6-Carboxy-4-pentyl-2-cyclohexen-1-nonansäure, 5-Carbonsäureanhydrid-4-hexyl-2-cyclohexen-1-octansäure, 5-Carbonsäureanhydrid-4-pentyl-2-cyclohexen-1-nonansäure; und deren Mischungen, vorzugsweise aus 6-Carboxy-4-hexyl-2-cyclohexen-1-octansäure, 5-Carboxy-4-hexyl-2-cyclohexen-1-octansäure und deren Mischung ausgewählt ist.

7. Zusammensetzung nach einem beliebigen der vorhergehenden Ansprüche, **dadurch gekennzeichnet, dass** die Menge des Additivs nach Formel (I), oder nach Formel (II), im Bereich von 0,1 bis 5 Gewichts-%, vorzugsweise von 0,1 bis 1 Gewichts-% liegt, bezogen auf das Gesamtgewicht der Zusammensetzung.

8. Bituminöse Emulsion, die mindestes ein Bitumen, mindestens ein Additiv nach Formel (I), oder nach Formel (II), deren Begriffsbestimmung einem beliebigen der Ansprüche 1 bis 7 entspricht, sowie mindestens eine wässrige Phase umfasst, welche möglicherweise mindestens ein Tensid enthält.

9. Bituminöse Emulsion nach Anspruch 8, wobei die Menge des Additivs nach Formel (I), oder nach Formel (II), deren Begriffsbestimmung einem beliebigen der Ansprüche 1 bis 7 entspricht, 0,1 bis 5 Gewichts-%, vorzugsweise 0,1 bis 3 %, stärker bevorzugt 0,1 bis 2 %, noch stärker bevorzugt 0,2 bis 1,5 Gewichts-%, wiederum stärker bevorzugt 0,3 bis 1 Gewichts-% ausmacht, bezogen auf das Gesamtgewicht der Emulsion.

10. Verfahren zur Herstellung einer bituminösen Emulsion gemäß der Begriffsbestimmung in Anspruch 8 oder 9, wobei es zumindest einen Schritt umfasst, in welchem Folgendes vermischt wird:
- mindestens ein Additiv nach Formel (I) oder Formel (II), deren Begriffsbestimmung einem beliebigen der Ansprüche 1 bis 7 entspricht,
- ein Bitumen, und
- eine wässrige Phase, die möglicherweise mindestens ein Tensid enthält.

11. Verfahren gemäß dem Anspruch 10, **dadurch gekennzeichnet, dass** es nacheinander die folgenden Schritte umfasst:
- Vermischen des Additivs nach Formel (I), oder nach Formel (II), mit einem Bitumen; und anschließend
- Vermischen einer wässrigen Phase, die möglicherweise mindestens ein Tensid enthält, mit der Lösung, wie sie nach dem Vermischen des Bitumens und des Additivs erhalten wurde.

12. Verfahren gemäß dem Anspruch 10, **dadurch gekennzeichnet, dass** es nacheinander die folgenden Schritte umfasst:
- Vermischen des Additivs nach Formel (I), oder nach Formel (II), mit einer wässrigen Phase, die möglicherweise mindestens ein Tensid enthält; und anschließend
- Vermischen der Lösung, wie sie nach dem Vermischen der wässrigen Phase und des Additivs erhalten wurde, mit dem Bitumen.

13. Asphaltmischgut zum Kalteinbau, das zumindest eine Emulsion gemäß der Begriffsbestimmung in Anspruch 8 oder 9 sowie Gesteinskörnungen umfasst.

14. Verwendung des Additivs nach Formel (I) oder nach Formel (II), wobei deren Begriffsbestimmung einem beliebigen der Ansprüche 1 bis 7 entspricht, um ein Asphaltmischgut zum Kalteinbau gemäß dem Anspruch 13 herzustellen.
